# EUROPÄISCHE PATENTANMELDUNG

(11) **EP 4 400 309 A1**
(43) Veröffentlichungstag der Anmeldung: **17.07.2024**
(21) Anmeldenummer: 24150830.8
(22) Anmeldetag: 09.01.2024
(51) Int. Cl.: B32B 27/36, B32B 7/022, B32B 7/027, B32B 7/06, B32B 27/08, B32B 27/16, B32B 27/18, B65D 65/40

(54) **POLYESTERVERPACKUNG BESTEHEND AUS THERMOFORMBARER UNTERFOLIE UND PEELFÄHIGER OBERFOLIE, VERFAHREN ZU IHRER HERSTELLUNG UND IHRE VERWENDUNG**

(30) Priorität: 11.01.2023 DE 102023100500
(71) Anmelder: Mitsubishi Polyester Film GmbH, 65203 Wiesbaden (DE)
(72) Erfinder: Peiffer, Herbert, 55126 Mainz (DE); Jesberger, Martin, 55128 Mainz (DE); Kuhmann, Bodo, 65594 Runkel (DE)
(74) Vertreter: Schweitzer, Klaus

(57) **Zusammenfassung**

Die Erfindung betrifft eine transparente Verpackung aus Polyester enthaltend eine ungestreckte, koextrudierte und thermoformbare Unterfolie und eine biaxial orientierte, heißsiegelbare und peelfähige Oberfolie.

## Beschreibung

Die Erfindung betrifft eine transparente Verpackung aus Polyester enthaltend eine ungestreckte, koextrudierte und thermoformbare Unterfolie und eine biaxial orientierte, heißsiegelbare und peelfähige Oberfolie.

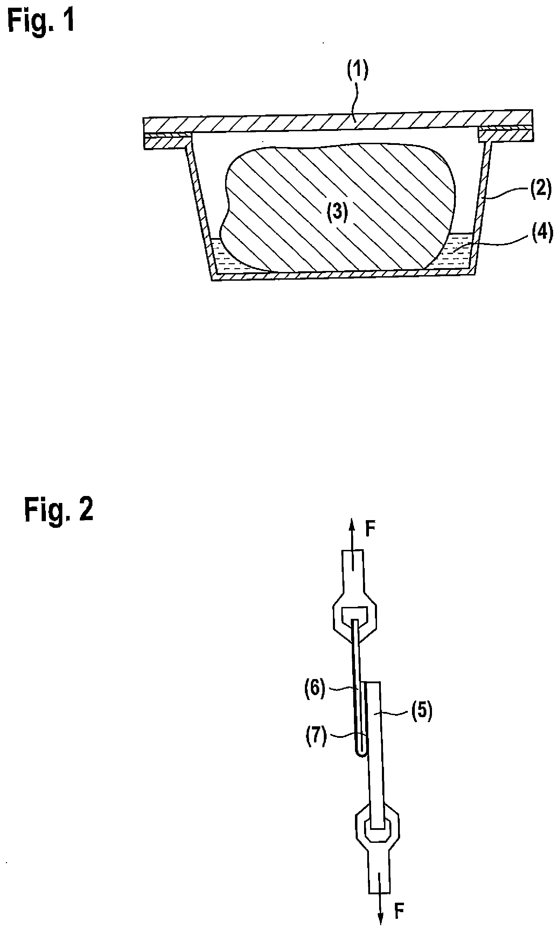

Die Unterfolie wird zu einer Menüschale tiefgezogen, die mit Lebensmittel, z.B. Frischfleisch, Fisch oder Geflügel, befüllt wird. Die Oberfolie wird auf die Menüschale mittels Wärme aufgesiegelt und bildet somit den Verschluss der Verpackung (Figur 1). Die Verpackung wird bei einer Temperatur hergestellt (u.a. Tiefziehen und Heißsiegelung), transportiert und gelagert, die deutlich niedriger als die Umgebungstemperatur ist. Beim Verbraucher wird die Oberfolie von der Menüschale abgezogen, ohne dabei zu zerreißen. Die Erfindung betrifft weiterhin ein Verfahren zur Herstellung der Packung und ihre Verwendung.

### Hintergrund

Transparente Menüschalen (engl. trays) aus thermoformbarem, amorphem Polyethylenterephthalat (aPET) werden, z.B. unter Anwendung von Vakuumverfahren hergestellt. Nach dem Befüllen der Menüschalen mit Lebensmittel wird - zum Schutz des Lebensmittels - eine Deckelfolie (gleich Oberfolie) auf den Rand der Menüschale aufgesiegelt und damit die Packung geschlossen. Das Handling der Produkte in solchen Packungen wird als sauber und hygienisch angesehen und erfreut sich einer großen Beliebtheit.

Eine übliche Methode, Packungen für die Verarbeitung von Fleisch, Fisch oder Geflügel herzustellen, besteht in der Anwendung von Vakuum, meist in Kombination mit Druck und Formwerkzeug. Die Packungen werden allgemein wie folgt hergestellt: Die Folie für die Herstellung der Menüschalen (gleich Unterfolie) wird als Rolle in die Thermoformmaschine eingespannt. Über spezielle Kammern wird die Folie durch Anwendung von Temperatur und Vakuum zu Menüschalen geformt. Bei Bedarf kann von der Gegenseite Druck auf die Folie aufgebracht werden; zusätzlich kann ein Formwerkzeug eingesetzt werden. Es erfolgt das Einlegen des Lebensmittels in die Menüschale, händisch oder maschinell. Über weitere Rollen wird die Deckelfolie (gleich Oberfolie) der Siegelstelle zugeführt und auf den Rand der Menüschalen unter Anwendung von Temperatur und Druck gesiegelt. Die Folienbahn, die mehrere tiefgezogenen Schalen umfasst, wird in einzelne Packungen, z.B. durch Stanzen, konfektioniert. Die Packungen gelangen dann nach weiteren Schritten, wie Bedruckung oder Etikettierung, in den Markt.

Die Herstellung (also das Verschließen der Packung bestehend aus Unter- und Oberfolie), der Transport und die Lagerung der Packungen erfolgt bei einer Temperatur, die deutlich niedriger ist als die Umgebungstemperatur. Dies ist insbesondere bei leicht verderblichen Lebensmitteln wie rohem Fleisch erforderlich, um eine marktübliche Haltbarkeit zu gewährleisten. Eine typische Temperatur, bei der die Verpackung hergestellt wird, beträgt 4 °C.

Es wird gefordert, dass die Siegelung von Menüschale und Deckelfolie "fest", d.h. widerstandsfähig ist. Die Siegelung muss gasdicht sein und darf z.B. beim Transport nicht aufgehen. Beim Öffnen der Packung wird gewünscht, dass der Kunde die Deckelfolie von der Menüschale abziehen kann, ohne sie dabei zu zerreißen. Dieser Vorgang wird herkömmlich mit "Peelen" bezeichnet.

In der Industrie hat sich mittlerweile etabliert, das Siegel- und Peelverhalten der Packungen unter Bedingungen zu überprüfen und zu beurteilen, wie sie direkt nach ihrer Herstellung vorherrschen, insbesondere bei einer niedrigen Temperatur von ca. 4° C. Die Prüfung der Packung umfasst dabei im Wesentlichen die beiden folgenden Punkte
- Die Packung muss eine widerstandsfähige Siegelung aufweisen
- Die Packung muss aufgezogen werden können, ohne dass dabei die Deckelfolie ein- oder abreißt.

Allgemein wird diese Eigenschaft der Packung mit "Cold-Peel" bezeichnet, siehe hierzu auch die Ausführungen in der EP 3 248 777 B1. Eine typische Temperatur, bei der das "Cold-Peel" Verhalten der Packung geprüft wird, ist 4 °C. Wird die Packung hierbei durch Aufwendung einer deutlich spürbaren Kraft geöffnet, ohne dass dabei die Deckelfolie einreißt, so spricht man von einem "medium Cold-Peel".

Neben dem "medium Peel" unterscheidet man noch "easy Peel" und "strong Peel", siehe hierzu auch die Ausführungen in der EP 3 248 777 B1 und in der EP 3 437 853 B1.

| | |
|---|---|
| Leichte Peelbarkeit (easy Peel) | Peelkraft im Bereich von ungefähr 2 bis 3 N je 15 mm Streifenbreite |
| Widerstandsfähige Peelbarkeit (medium Peel) | Peelkraft im Bereich von ungefähr 3 bis 7 N je 15 mm Streifenbreite |
| Starke, widerstandsfähige Peelbarkeit (strong Peel) | Peelkraft im Bereich von mehr als 7 N je 15 mm Streifenbreite |

Finden die Peelversuche in der Kälte statt (bspw. bei 4 °C), so spricht man von "easy Cold-Peel", "medium Cold-Peel" bzw. "strong Cold-Peel".

Eine widerstandsfähige Peelbarkeit wird insbesondere bei Verpackungen von frischem Fleisch und Geflügel gewünscht. Beim Einfüllen dieser Lebensmittel in die Menüschale kann es vorkommen, dass der Siegelrand der Menüschale mit Feuchtigkeit und kleinen Mengen von Lebensmittelsubstanzen, beispielsweise Fleischsaft, kontaminiert wird. Die Heißversiegelung der beiden Folien muss in diesem Fall komplett durch die kontaminierte Fläche erfolgen.

Derzeit wird dieses Problem ("medium Cold-Peel" und Siegelung durch den kontaminierten Siegelrand) üblicherweise durch die Verwendung von mehrschichtigen Kunststofffolien, sowohl für die thermoformbare Unterfolie als auch für die siegelfähige Oberfolie, gelöst.

Ein typisches Material für den Aufbau von solchen Verpackungen ist Polyester. Für die Unterfolie wird dann typischerweise thermoformbares aPET und für die Oberfolie z.B. biaxial orientiertes PET verwendet. Auf die Versiegelungsschichten der Folien wird ein von Polyester verschiedener Kunststoff aufgebracht.

Diese andere Art von Kunststoff ist so ausgesucht, dass sie bei der gewünschten Siegeltemperatur schmelzbar und im geschmolzenen Zustand duktiler als aPET ist. Ein typisches Material hierfür ist Polyethylen (PE), welches einen sehr niedrigen Schmelzpunkt aufweist und im geschmolzenen Zustand duktil ist. Das PE wird in der Regel durch Heißlaminieren auf die jeweiligen Polyesterfolien aufgebracht.

Verpackungen, bei denen die Basisschichten für die Menüschale und für die Deckelfolie aus Polyester und die Siegelschichten aus PE bestehen, sind am Markt als PET-PE-Lösung bekannt.

Bei der Herstellung der vorgenannten Packungen entsteht ein Stanzgitter (engl. "skeletal waste"), das bis zu 60 % der eingesetzten Folien ausmacht. Zur Reduzierung des "skeletal waste" ist es wünschenswert, wenn das Stanzgitter direkt zur Herstellung neuer Folien, z.B. als Regranulat, eingesetzt werden kann.

Bei der Standard PET-PE-Lösung kann das Stanzgitter in der Regel nicht rezykliert werden, da das PE bei der Herstellung neuer Folien eine hohe Trübung der "neuen" PET-Folie bewirkt, die unerwünscht ist. Es sind daher Bemühungen im Gange, die vorgenannten Verpackungen zu 100 % aus Polyester herzustellen, bei denen das Stanzgitter komplett wiederverwendbar ist.

Die vorliegende Erfindung bezieht sich auf eine Packung, bei der beide Folien (Ober- und Unterfolie) komplett aus Polyester aufgebaut sind, und die für eine Heißversiegelung durch kontaminierte Flächen geeignet ist und "medium Cold-Peel" Eigenschaften aufweist. Von Vorteil ist hierbei, dass durch die Nutzung von nur einem Rohstoff (Einstoffverpackung), das "skeletal waste" als Regenerat verwendet werden kann, ohne dass es dabei zu optisch sichtbaren Qualitätseinbußen kommt.

### Stand der Technik

Packungen aus thermoformbarer Unterfolie und siegelbarer Oberfolie sind bekannt.

In der EP 2 643 238 B1 wird eine Menüschale beschrieben, die aus einem ein- oder mehrlagigen Materialbogen gebildet ist, wobei jede der Lagen wenigstens 85 % aPET enthält. Die Menüschale umfasst einen Bodenteil, Seitenwände und eine Dichtlippe, wobei die Dichtlippe eine nach oben gerichtete Dichtungsfläche aufweist. Die Dichtungsfläche weist zusätzlich zu dem Schalenmaterial eine Lage eines erfindungsgemäßen Klebstoffs auf. Die Schale wird durch Thermoformen des Materialbogens gebildet, wobei der Klebstoff mittels Walzenbeschichtung direkt nach der Formgebung der Schale auf die Dichtungsfläche aufgebracht werden kann. Der Klebstoff umfasst Ethylen-Co und Terpolymere oder Mischungen hiervon, sowie ein Wachs. Der Behälter ist insbesondere für eine Siegelung geeignet, bei der die Dichtungsfläche der Menüschale mit kleinen Mengen von Lebensmittelsubstanzen, beispielsweise Fleischsaft, kontaminiert ist. Die erfindungsgemäße Lösung ist aus mehreren Aspekten verbesserungsbedürftig: Durch das Aufbringen der zusätzlichen Klebeschicht auf die Dichtungsfläche wird das Produkt verteuert; beim Prozess entstandene Abfälle können nicht ohne Qualitätsverlust aufgearbeitet werden, d.h., dass das sogenannte "post consumer recyling" deutlich erschwert ist.

In der EP 3 296 227 A1 wird eine Menüschale beschrieben, die aus einem ein- oder mehrlagigen Materialbogen gebildet ist, wobei jede der Lagen wenigstens 85 % aPET enthält. Die Schale umfasst neben Bodenteil, Seitenwände eine umlaufende Dichtungslippe, die eine nach oben gerichtete Dichtungsfläche aufweist. Zumindest die Schicht der Menüschale, die die Dichtungsfläche bildet, ist derart modifiziert, dass sie eine erhöhte Weichheit bei relevanten Siegeltemperaturen aufweist, typischerweise zwischen 120 und 180 °C. Zudem ist diese Schicht so modifiziert, dass ihre Oberflächenenergie reduziert ist. Die erhöhte Weichheit der Siegelschicht erhält man durch Modifizierung des in der Schicht enthaltenen PETs mittels Comonomeren, wie Isophthalsäure, Cyclohexandimethanol oder Diethylenglykol. Eine Herabsetzung der Oberflächenenergie der Siegelschicht geschieht durch Zugabe eines Wachses. Das Wachsadditiv kann z.B. mittels Koextrusion in die Oberflächenschicht eingebracht werden. Durch den speziellen Aufbau der Siegelschicht ist die Schale prinzipiell für die Siegelung durch Kontamination geeignet; eine Cold-Peel-Fähigkeit der Folie ist an keiner Stelle der Schrift erwähnt. In der Anmeldung werden mehrere Materialien genannt, die für eine Modifizierung der Siegelschicht der Menüschale in Betracht kommen. Sie enthält jedoch keine quantitativen Angaben für die Rezeptur der Siegelschicht, außerdem wird die Dicke der Siegelschicht nicht offenbart. Eine Nacharbeitung dieser Erfindung scheiterte mangels dieser notwendigen Angaben.

Die EP 3 623 154 A1 betrifft eine koextrudierte, transparente und thermoformbare Polyesterfolie, enthaltend eine Basisschicht aus aPET und eine heißsiegelbare Deckschicht, wobei die heißsiegelbare Deckschicht zumindest 80 Gew.-% Polyester umfasst, der Polyester der Deckschicht aus 25 bis 95 Mol-% aufgebaut ist, die auf mindestens eine aromatische Dicarbonsäure und 5 bis 75 Mol-%, die auf mindestens eine aliphatische Dicarbonsäure zurückgehen. Die Deckschicht enthält bis zu 0,4 Gew.-% Partikel mit einem mittleren Durchmesser d₅₀ von 2 bis 8 µm und weist eine Dicke von 10 bis 100 µm auf. Die Folie ist für die Siegelung durch Kontamination geeignet; sie ist jedoch in ihren Peeleigenschaften, insbesondere dem Cold-Peel, verbesserungswürdig.

### Aufgabenstellung

Aufgabe der vorliegenden Erfindung war es, eine Verpackung aus Polyester für die Eingangs genannte Anwendung zur Verfügung zu stellen, die sich durch eine gute Thermoformbarkeit der Unterfolie und durch hervorragende Peeleigenschaften der Oberfolie zur Unterfolie auszeichnet. Von der Verpackung wird gefordert, dass sie "medium Cold-Peel" Eigenschaften aufweist, auch für den Fall, dass die zu versiegelnde Oberkante der Menüschale mit Lebensmittelsubstanzen kontaminiert ist. Sie soll die Nachteile von Packungen nach dem Stand der Technik nicht aufweisen und sich insbesondere durch die folgenden Punkte/Eigenschaften auszeichnen:
- Die thermoformbare Unterfolie, geeignet für die Herstellung von Menüschalen durch Thermoformen, ist auf der Polymerseite allein aus Polyesterrohstoffen aufgebaut
- Die Packung bleibt nach der Versiegelung in gekühlter Umgebung - auch durch kontaminierte Oberflächen - fest verschlossen (gleich widerstandsfähige Siegelung) und öffnet sich keinesfalls, z.B. durch Erschütterungen beim Transport.
- Die Verpackung weist sehr gute "Cold-Peel-Eigenschaften" auf. Die Peelkraft (gemessen im kalten Zustand der Packung bei 4 °C) liegt im Bereich von ungefähr 3 bis 7 N je 15 mm Streifenbreite der Folien. Die Oberfolie lässt sich von der Unterfolie abziehen (Peelen), ohne dass dabei die Oberfolie einreißt oder weiterreißt.
- Die Packung zeichnet sich bevorzugt durch eine brillante Optik aus. Dies betrifft die Trübung, insbesondere aber die Clarity der Packung. Sowohl die Ober- als auch die Unterfolie besitzen bevorzugt eine Trübung von kleiner als 20 % und eine Clarity von größer als 80 %.
- Die beiden Folien zur Herstellung der Packung (Ober- und Unterfolie) lassen sich wirtschaftlich herstellen.
- Bevorzugt lässt sich der bei der Herstellung der Packung entstandene Abfall ("skeletal waste") ohne Qualitätseinbußen zur Herstellung von neuer Ober- oder Unterfolie wiederverwenden.

### Lösung der Aufgabe

Gelöst wird die Aufgabe durch Bereitstellen von zwei Polyesterfolien zur Herstellung einer transparenten Verpackung mittels Thermoformung und Heißsiegelung. Die Lösung umfasst eine koextrudierte und ungestreckte, thermoformbare Unterfolie (A) und eine koextrudierte und biaxial orientierte Oberfolie (B), die zu der Unterfolie (A) heißsiegelbar und in der Kälte peelfähig ist ("Cold-Peel")
I Die Unterfolie (A) ist eine Folie, die zumindest eine Basisschicht (A") aus aPET und eine Deckschicht (A') umfasst, wobei die Unterfolie (A) zumindest 80 Gew.-% Polyester enthält, wobei
   a) der Polyester der Deckschicht (A') ein Copolyester ist, der aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen und auf Basis von aliphatischen Diolen (100 Mol-%) aufgebaut ist, wobei die Mol-%-Angaben sich zu 100 % ergänzen.
   b) die Deckschicht (A') > 0 bis 2,0 Gew.-% anorganische oder organische Partikel mit einem mittleren Durchmesser d₅₀ von 2 bis 8 µm enthält
   c) die Deckschicht (A') eine Schichtdicke von 5 bis 100 µm aufweist
II Die Oberfolie (B) ist eine koextrudierte und biaxial orientierte Polyesterfolie, die eine Basisschicht (B") und eine gegenüber der Deckschicht (A') der Unterfolie (A) heißsiegelbare und peelfähige Deckschicht (B') aufweist, wobei
   d) der Polyester der Basisschicht (B") ein Copolyester ist, der aus mindestens 80 Mol-% an Einheiten aufgebaut ist, die auf eine aromatische Dicarbonsäure zurückgehen und auf Basis von aliphatischen Diolen aufgebaut ist, die 2-10 Mol-% Butandiol und 1-8 Mol-% Neopentylglykol enthalten, wobei die Summe der Molprozente der Dicarbonsäuren und Diole jeweils 100 % ergibt und der zu 100 Mol-% fehlende Anteil bei den Diolen Ethylenglykol ist, und
   die heißsiegelbare und peelfähige Deckschicht (B')
   e) zu mindestens 80 Gew.-%, aus einem Copolyester aufgebaut ist, der aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen, wobei die Summe der dicarbonsäureabgeleiteten Molprozente 100 ergibt; und
   f) > 0 bis 10 Gew.-% anorganische und/oder organische Partikel mit einem mittleren Durchmesser d₅₀ von 2 bis 8 µm enthält
   und wobei die Oberfolie (B) aufgrund der oben genannten Zusammensetzung
   g) zur Deckschicht (A') der Unterfolie (A) ein "Cold-Peel" aufweist, das gemessen bei 4 °C, im Bereich von 3 bis 7 N/15 mm liegt (= medium Cold-Peel).

Die thermoformbare Unterfolie (A) wird durch eine koextrudierte, nicht verstreckte, transparente Polyesterfolie (A"A') oder optional (A‴A"A') gebildet. Sie ist damit zumindest zweischichtig aufgebaut. Sie besteht dann aus der Basisschicht (A") und der auf dieser durch Koextrusion aufgebrachten Deckschicht (A').

Die Oberfolie (B) wird durch eine koextrudierte und biaxial orientierte, transparente, heißsiegelbare und peelfähige Polyesterfolie (B"B') oder {B‴B"B') gebildet. Sie ist damit zumindest zweischichtig aufgebaut. Sie besteht dann aus der Basisschicht (B") und der auf dieser aufgebrachten heißsiegelbaren Deckschicht (B`).

### Kurze Beschreibung der Figuren

Figur 1 zeigt eine Verpackung im Querschnitt mit (1) = Oberfolie (B), (2) = Menüschale (= Unterfolie (A), (3) = Verpackungsgut (z.B. Fleisch), (4) = Fleischsaft
Figur 2 zeigt die Prüfvorrichtung zur Messung des Abschälverhaltens mit (5) = aPET-Folie (= Menüschale), (6) = Oberfolie (B), (7) = Deckschicht (B')
Figur 3 zeigt ein typisches Reiß/Dehnungsdiagramm von Peelfolien
Figur 4 zeigt das Handpeelgerät "PEEL CONTROL" und die Durchführung des Handpeeltests

### Definitionen und Vereinbarungen

Mit heißsiegelbar wird die hier beschriebene Eigenschaft einer Polyesterfolie verstanden, die zumindest eine Basisschicht (B") und eine heißsiegelbare Deckschicht (B') enthält. Die heißsiegelbare Deckschicht (B') wird mittels Siegelbacken durch Anwendung von Wärme (100 bis 200 °C) und Druck (1 bis 6 bar) in einer bestimmten Zeit (0,1 bis 4 sec) mit einem Substrat, z.B. Menüschalen aus aPET, verbunden, ohne dass dabei die Basisschicht (B") plastisch wird. Das Polymer der Deckschicht (B') besitzt dazu einen deutlich niedrigeren Schmelzpunkt als das Polymere der Basisschicht. Wird für das Polymere der Basisschicht Polyethylenterephthalat mit einem Schmelzpunkt von 254 °C verwendet, so beträgt der Schmelzpunkt für das Polymer der Deckschicht (B') weniger als 200 °C, z.B. 180 °C.

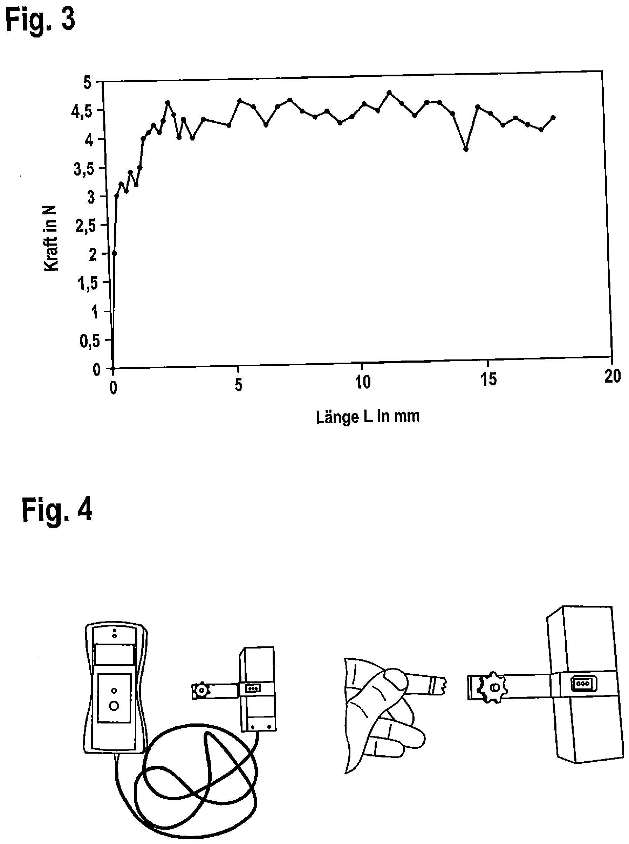

Eine heißsiegelbare Polyester-Folie ist peelfähig, wenn sie nach der Heißsiegelung von der Menüschale abgezogen werden kann, ohne dabei ein- oder weiterzureißen. Der Verbund aus Oberfolie und Menüschale geht beim Abziehen der Folie von der Menüschale i.A. in der Naht zwischen der Heißsiegelschicht und der Menüschalenoberfläche auf (vgl. Ahlhaus, O.E.: Verpackung mit Kunststoffen, Carl Hanser Verlag, S. 271, 1997, ISBN 3-446-17711-6). Beim Abziehen der auf einen Teststreifen der Menüschale heißgesiegelten Folie in einem Zug-Dehnungs-Prüfgerät entsprechend Figur 2 wird ein Abschälverhalten der Folie gemäß Figur 3 (180 °-Peel-Methode) erhalten. Bei Beginn des Abschälens der Folie von dem Substrat steigt die dazu erforderliche Kraft gemäß Figur 3 bis zu einem bestimmten Wert (z.B. 5 N/15mm) an und bleibt dann über den gesamtem Schälweg in etwa konstant, ist allerdings mit mehr oder weniger großen Schwankungen behaftet.

Unter "Cold-Peel" wird das Peel-Verhalten einer heißsiegelbaren und peelfähigen Polyesterfolie verstanden, welches sie nach Versiegelung und anschließender Lagerung in einer Kühlkammer bei Temperaturen von 2 bis 5 °C aufweist. Zum Testen dieser Eigenschaft wird nach dem Stand der Technik die Polyesterfolie auf eine Menüschale gesiegelt und die gesiegelte Packung in einer Kühlkammer für 1 h gelagert. Danach wird in der geschlossenen Kühlkammer die Folie von der Menüschale per Hand abgezogen. Sie muss hierbei komplett peelen, d.h. sie darf bei diesem Vorgang weder einreißen noch weitereißen. Man unterscheidet hierbei zwischen "easy Peel" (ep), "medium Peel" (mp) und "strong Peel" (sp). Von dieser qualitativen Methode wird an dieser Stelle kein Gebrauch gemacht, vielmehr wird eine quantitative Methode angewendet, die weiter unten näher beschrieben wird.

Im Vorstehenden wie im Folgenden bezieht sich Gew.-%, sofern nichts anderes erwähnt, immer auf die Masse der jeweiligen Schicht oder das jeweilige System, in dessen Zusammenhang die Angabe genannt ist.

Zur Definition von Polymerzusammensetzungen wird auf Begriffe zurückgegriffen, die im Folgenden erläutert werden.

Generell kann ein Polyester ein Homopolyester oder ein Copolyester sein.

Unter Polyester ist ein Polymer zu verstehen, welches durch Polykondensation von Diolen und Dicarbonsäuren entstanden ist. Dabei ist es irrelevant, ob die Polykondensation direkt aus den Diol- bzw. Dicarbonsäure-Monomeren heraus stattfindet, oder aus geeigneten, industrieüblichen Derivaten, wie Dimethylterephthalt (DMT) als Derivat der Terephthalsäure (TPA).

Homopolyester sind solche Polyester, bei deren Herstellung genau eine Sorte Diol- sowie genau eine Sorte Dicarbonsäure verwendet wurden. Bspw. ist Polyethylenterephthalat (PET) ein Homopolyester, der ausschließlich Wiederholungseinheiten aufweist, die auf Ethylenglykol und Terephthalsäure zurückzuführen sind.

Copolyester sind solche Polyester, bei deren Herstellung mehr als eine Sorte Diol- und/oder mehr als eine Sorte Dicarbonsäure verwendet wurden. Um Copolyester genauer beschreiben zu können, bietet es sich an, die molare Zusammensetzung der Monomere anzugeben, wobei die Dicarbonsäurekomponenten von den Diolkomponenten getrennt betrachtet werden (Bezugsgrößen sind die Gesamtheit aller Dicarbonsäuren, sowie - getrennt davon - die Gesamtheit aller Diole im betreffenden Copolyester). Man spricht in diesem Zusammenhang auch von Dicarbonsäure- bzw. Diol-abgeleiteten Einheiten oder von Einheiten oder Komponenten, die auf bestimmte, definierte Dicarbonsäuren bzw. Diole zurückgehen. Beispielsweise kann für einen Copolyester die Zusammensetzung der Dicarbonsäurecomponenten wie folgt lauten:
- 90 Mol-% Terephthalsäure
- 10 Mol-% Isophthalsäure
und die Zusammensetzung der Diolkomponenten wie folgt lauten:
- 100 Mol-% Ethandiol
wobei sich alle vorkommenden Dicarbonsäurekomponenten auf 100 Mol-% summieren, und alle vorkommenden Diolkomponenten auf 100 Mol-% summieren.

Alternativ sind auch Angaben zur molaren Zusammensetzung üblich, bei der die Gesamtheit aller Wiederholungseinheiten aus Alkylendicarboxylat im betreffenden Copolyester als Bezugsgröße gewählt wird. Obige Zusammensetzung ließe sich bspw. dann ausdrücken als
- 90 Mol-% Ethylenterephthalat
- 10 Mol-% Ethylenisophthalat
wobei sich alle im Molekül vorkommenden Wiederholungseinheiten auf 100 Mol-% summieren.

Im Rahmen dieser Erfindung hat sich gezeigt, dass die Verwendung bestimmter Copolyester in bestimmten Schichten einer Polyesterfolie vorteilhaft ist. Diese Copolyester werden im Beschreibungstext offenbart, und können so (wie definiert) als einziger Copolyester in der betreffenden Folienschicht verwendet werden. Weiterhin ist es möglich Mischungen aus verschiedenen Polyestern zu verwenden, die über die Gesamtmischung aller Polyester der betreffenden Schicht betrachtet eine zu den beschriebenen Copolyestern äquivalente Monomerzusammensetzung aufweisen.

Die Begriffe "Packung" und "Verpackung" sind synonym und werden im Vorstehenden und Folgenden wechselweise bei gleicher Bedeutung verwendet.

### (1) Unterfolie (A) = Unverstreckte Polyesterfolie

Die Unterfolie besteht aus aPET, einem Polyester der in amorpher Form vorliegt. Die amorphe Form wird üblicherweise durch das Herstellverfahren einer solchen aPET Folie bestimmt. Im Vergleich zu biaxial orientierten Folien- die eine Kristallinität aufweisen - wird hier auf einen Streck- und Fixierschritt verzichtet. Der Begriff aPET ist in der Industrie üblich für amorphe Polyesterfolien, deren Hauptbestandteil (aber nicht unbedingt ausschließlich) Polyester auf Basis von Polyethylenterephthalat (PET) ausmacht.

### Basisschicht (A")

### Polyester für die Basisschicht (A")

Die Basisschicht (A") der Folie besteht zu mindestens 80 Gew.-%, bevorzugt mindestens 90 Gew.-% und besonders bevorzugt mindestens 95 Gew.-% aus einem thermoplastischen Polyester, der aus Dicarbonsäure- und aus Diol-abgeleiteten Einheiten, bzw. Dicarboxylaten und Alkylenen aufgebaut ist und die folgenden Dicarboxylate und Alkylene, jeweils bezogen auf die Gesamtdicarboxylat- bzw. Gesamtalkylenmenge, beinhaltet:
- ≥ 90 Mol-%, bevorzugt ≥ 92 Mol-%, besonders bevorzugt ≥ 95 Mol-% Terephthalat
- ≤ 10 Mol-%, bevorzugt < 8 Mol-%, besonders bevorzugt ≤ 5 Mol-% Isophthalat
- ≥ 90 Mol-%, bevorzugt ≥ 95 Mol-% und besonders bevorzugt ≥ 98 Mol-% an Ethylen.

Weniger bevorzugte zur Bildung des Polyesters geeignete aliphatische Diole sind beispielsweise Diethylenglykol, Triethylenglykol, aliphatische Glykole der allgemeinen Formel HO-(CH₂)ₙ-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen.

Weniger bevorzugte aromatische und aliphatische Dicarbonsäuren sind Benzoldicarbonsäuren, Naphtalindicarbonsäuren, beispielsweise Naphthalin-1,4- oder -1,6-dicarbonsäure, Biphenyl-x,x'-dicarbonsäuren, insbesondere Biphenyl-4,4'-dicarbonsäure, Diphenylacetylen-x,x'-dicarbonsäuren, insbesondere Diphenylacetylen-4,4'-dicarbonsäure, oder Stilben-x,x'-dicarbonsäuren, Cyclohexandicarbonsäuren, wie Cyclohexan-1,4-dicarbonsäure, sowie (C₃ bis C₁₉)-Alkandisäuren, wobei der Alkanteil geradkettig oder verzweigt sein kann.

Besonders vorteilhaft ist es, wenn in der Basisschicht (A") ein Copolyester auf Basis von Terephthalat und geringen Mengen (≤ 5 Mol-%) Isophthalat verwendet wird. In diesem Fall sind die Herstellbarkeit und die optischen Eigenschaften der Folie besonders gut. Die besonders bevorzugten Copolyester, die die optimalen Eigenschaften der Folie bereitstellen, sind solche, die aus Terephthalat- und Isophthalat-Einheiten und aus Ethylenglykol-Einheiten aufgebaut sind.

Um das Verarbeitungsverhalten der Unterfolie (A) weiter zu verbessern, ist es von Vorteil, auch in die Basisschicht (A") und/oder in die eventuell vorhandene Deckschicht (A‴) Partikel einzuarbeiten, die den folgenden Bedingungen genügen
- Die Partikel weisen bevorzugt einen mittleren Partikeldurchmesser d₅₀ von 2 bis 8 µm auf. Es hat sich dabei als besonders zweckmäßig erwiesen, Partikel mit einem mittleren Partikeldurchmesser d₅₀ von 2,5 bis 7,5 µm und besonders bevorzugt von 3 bis 7 µm zu verwenden.
- Die Partikel sind bevorzugt in einer Konzentration (bezogen auf die jeweilige Schicht) von > 0 bis 1,0 Gew.-% vorhanden. Besonders bevorzugt beträgt die Konzentration der Partikel > 0 bis 0,8 Gew.-% und ganz besonders bevorzugt > 0 bis 0,5 Gew.-%.
- Die Partikel sind bevorzugt Calciumcarbonat und/oder Siliciumdioxid Partikel, besonders bevorzugte Partikel sind synthetisch hergestellte, amorphe SiO₂-Partikel in kolloidaler Form, die hervorragend in die Polymermatrix eingebunden werden. Zur Herstellung der SiO₂-Partikel wird auf den Stand der Technik verwiesen; das Verfahren ist z.B. in der EP 1 475 228 B1 ausführlich offenbart.

Zur Erzielung guter optischer Eigenschaften der Folie hat es sich bei einer dreischichtigen Folie mit (A‴A"A')-Aufba-u als zweckmäßig erwiesen, die Menge an Partikeln in der Basisschicht (A") niedriger einzustellen als in den Deckschichten (A' und A‴). Bei der dreischichtigen Folie vom genannten Typ soll zweckmäßiger Weise in der Basisschicht (A") die Menge der Partikel zwischen 0 und 0,2 Gew.-% liegen, vorzugsweise zwischen 0 und 0,10 Gew.-%. Als besonders zweckmäßig hat es sich dabei erwiesen, in die Basisschicht nur Partikel einzuarbeiten, wie sie über das arteigene Regenerat in die Folie gelangen. In diesem Fall können die gewünschten optischen Eigenschaften der Folie, insbesondere die niedrige Trübung und die hohe Clarity der Folie, gut erreicht werden.

Die Dicke der Deckschicht (A‴) kann gleich der Deckschicht (A') sein oder von dieser verschieden.

Die Basisschicht (A") der Unterfolie (A) kann Regenerat aus der Packungsherstellung ("skeletal waste") enthalten, das bei der Herstellung der Folie in einer Menge von bis zu 70 Gew.-% der Extrusion zugeführt werden kann, ohne dass dadurch die physikalischen, insbesondere aber die optischen Eigenschaften der Unterfolie (A) negativ beeinflusst werden.

### Deckschicht (A‴)

Die Deckschicht (A‴) entspricht von der Rezeptur her der Basisschicht (A"), muss aber nicht zwingend mit dieser identisch sein.

### Deckschicht (A')

### Polyester für die Deckschicht (A')

Erfindungsgemäß umfasst die Deckschicht (A') mindestens einen Polyester und optional Partikel. Der Polyester ist ein Copolyester und ist aufgebaut aus Einheiten, die von aromatischen und aliphatischen Dicarbonsäuren, sowie von aliphatischen Diolen abgeleitet sind. Die auf die aromatischen Dicarbonsäuren zurückgehenden Einheiten sind in dem Copolyester in einer Menge von 25 bis 95 Mol-%, bevorzugt 40 bis 95 Mol-%, besonders bevorzugt 50 bis 95 Mol-% enthalten. Die auf die aliphatischen Dicarbonsäuren zurückgehenden Einheiten sind in dem Polyester in einer Menge von 5 bis 75 Mol-%, bevorzugt 5 bis 60 Mol-%, besonders bevorzugt 5 bis 50 Mol-% enthalten, wobei die Mol-%-Angaben für Dicarbonsäureeinheiten und für die Dioleinheiten in Summe jeweils 100 Mol-% ergeben.

Beispiele für die erfindungsgemäß einsetzbaren aromatischen Dicarbonsäuren sind die Terephthalsäure und die Isophthalsäure.

Beispiele für aliphatische Dicarbonsäuren sind die Adipinsäure, die Pimelinsäure, die Korksäure, die Azelainsäure und die Sebazinsäure. Erfindungsgemäß bevorzugt einsetzbar sind die Azelainsäure und die Sebazinsäure, insbesondere die Sebazinsäure. Weniger bevorzugt sind die Pimelinsäure und die Korksäure.

Beispiele für die erfindungsgemäß einsetzbaren aliphatischen Diole sind Ethylenglykol, 1,3-Propandiol, 1,4-Butandiol, 1,5-Pentandiol, Diethylenglykol, Triethylenglykol, 1,4-Cyclohexandimethanol und Neopentylglykol.

In einer bevorzugten Ausführungsform beinhaltet der Polyester die folgenden Dicarboxylate und Alkylene, jeweils bezogen auf die Gesamtdicarboxylat- bzw. Gesamtalkylenmenge
- 25 bis 95 Mol-%, bevorzugt 30 bis 90 Mol-% und besonders bevorzugt 40 bis 70 Mol-% Terephthalat
- 0 bis 35 Mol-%, bevorzugt 5 bis 35 Mol-% und besonders bevorzugt 10 bis 35 Mol-% Isophthalat
- 5 bis 75 Mol -%, bevorzugt 8 bis 70 Mol-% und besonders bevorzugt 11 bis 65 Mol-% Sebazat
- 0 bis 50 Mol-%, bevorzugt 0 bis 40 Mol-% und besonders bevorzugt 0 bis 30 Mol-% Azelat
- ≥30 Mol-%, bevorzugt ≥40 Mol-% und besonders bevorzugt ≥ 50 Mol-% Ethylen.

Die molare Zusammensetzung des Copolyesters der Deckschicht (A') hat entscheidenden Einfluss auf die medium Cold-Peel Eigenschaften der Verpackung. Liegen die molaren Anteile außerhalb der angegebenen Grenzen, können die geforderten medium Cold-Peel Eigenschaften nicht mehr erreicht werden.

Der Polyester für die Deckschicht (A') kann auch aus Mischungen von Polyestern (z.B. aus zwei Polyestern, Polyester I und Polyester II) aufgebaut sein, die als Mischung betrachtet eine zu den oben aufgeführten Copolyestern äquivalente Monomerzusammensetzung aufweisen. Die Polyestermischung wird dann dem Extruder für diese Schicht zudosiert.

### Partikel in der Deckschicht (A')

Zur weiteren Verbesserung der Verarbeitbarkeit der Folie hat es sich als günstig erwiesen, die Deckschicht (A') zu modifizieren. Dies geschieht am besten mit Hilfe von geeigneten Partikeln, die dem Polyester in bestimmten Mengen zugegeben werden.

Für eine gute Verarbeitbarkeit der Folie hat es sich als vorteilhaft erwiesen, Partikel mit einem mittleren Partikeldurchmesser d₅₀ von 2 bis 8 µm, bevorzugt von 2,5 bis 7,5 µm und besonders bevorzugt von 3 bis 7 µm zu verwenden. Bei der Verwendung von Partikeln mit einem Durchmesser von unterhalb 2 µm ist ein positiver Einfluss der *Partikel* auf das Verarbeitungsverhalten der Folie nicht mehr gegeben. Die Folie neigt zum Verblocken, was unerwünscht ist. Partikel mit einem Durchmesser von größer als 8 µm verursachen in der Regel eine zu hohe Trübung.

Dabei hat es sich als günstig erwiesen, wenn die Deckschicht (A') *Partikel* in einer Konzentration > 0 bis zu 2 Gew.-%, bevorzugt > 0 bis zu 1,5 Gew.-% und besonders bevorzugt > 0 bis zu 1,0 Gew.-% enthält. Enthält die Deckschicht (A') Partikel in einer Konzentration von mehr als 2 Gew.-%, so wird die Trübung der Folie zu groß.

Erfindungsgemäß bevorzugte Partikel sind synthetisch hergestellte, amorphe SiO₂-Partikel in kolloidaler Form, die hervorragend in die Polymermatrix eingebunden werden. Zur Herstellung der SiO₂-Partikel wird auf den Stand der Technik verwiesen; das Verfahren ist z.B. in der EP 1 475 228 B1 ausführlich offenbart.

### Dicke der Deckschicht (A')

Erfindungsgemäß weist die Deckschicht (A') eine Dicke von 5 bis 100 µm auf. Ist ihre Dicke geringer als 5 µm, so ist die Siegelung der Folie zur Oberfolie (B) nicht ausreichend. Ist ihre Dicke größer als 100 µm, so neigt die Folie zum Verblocken, was unerwünscht ist.

### Aufbau der Unterfolie (A)

Die erfindungsgemäße Unterfolie (A) kann zwei- oder dreischichtig aufgebaut sein. Zur Erzielung der vorgenannten Eigenschaften, insbesondere der geforderten optischen

Eigenschaften hat sich ein dreischichtiger Aufbau der Folie mit den Schichten (A‴A"A') als günstig erwiesen. Die erfindungsgemäße Folie umfasst dann die Basisschicht (A"), die heißsiegelbare Deckschicht (A') auf der einen Seite der Basisschicht (A") und die Deckschicht (A‴) auf der anderen Seite der Basisschicht (A"). Die Deckschicht (A" `) entspricht von der Rezeptur her der Basisschicht (A"), muss aber nicht zwingend mit dieser identisch sein.

### Dicke der Unterfolie (A)

Die Gesamtdicke der erfindungsgemäßen Unterfolie (A) kann innerhalb bestimmter Grenzen variieren. Sie beträgt 100 bis 1500 µm, bevorzugt 110 bis 1300 µm und besonders bevorzugt 120 bis 1100 µm, wobei die Dicke der Basisschicht mindestens 65 % der Gesamtfoliendicke ausmacht. Ist die Dicke der Folie geringer als 100 µm, so sind die mechanischen Eigenschaften und die O₂-Barriereeigenschaften der Folie nicht ausreichend. Ist die Dicke der Folie größer als 1500 µm, so wird ihre Herstellung unwirtschaftlich, was unerwünscht ist.

### Verfahren zur Herstellung der Unterfolie (A)

Die Erfindung betrifft daneben ein Verfahren zur Herstellung der erfindungsgemäßen thermoformbaren Polyesterfolie nach dem bekannten Koextrusionsverfahren. Neben den genannten Rohstoffen können hier auch Regenerate aus verschiedenen Quellen verwendet werden.
- Arteigenes, wie es bei der Folienherstellung anfällt oder
- "Skeletal waste", wie es bei der Packungsherstellung anfällt.

Im Rahmen dieses Verfahrens wird so vorgegangen, dass die den einzelnen Schichten (A"A') oder (A‴ A"A') entsprechenden Schmelzen durch eine Flachdüse koextrudiert werden, die so erhaltene Folie zur Verfestigung auf einer oder mehreren Walzen abgezogen wird und anschließend aufgerollt wird. Die Folie wird dabei so abgekühlt, dass sie im Wesentlichen amorph ist.

### (II) Oberfolie (B) = Siegelfähige Polyesterfolie

Die Packung nach der vorliegenden Erfindung enthält eine Oberfolie (B), die durch eine transparente, koextrudierte, biaxial orientierte, heißsiegelbare und peelfähige Polyesterfolie aus den Schichten (B` B") oder (B' B" B‴) aufgebaut ist. Die heißsiegelbare und peelfähige Deckschicht (B') ist überwiegend, d.h. zu mindestens 80 Gew.-%, aus Polyester aufgebaut.

### Basisschicht (B")

### Polyester für die Basisschicht (B")

Die Basisschicht (B") der Oberfolie (B) besteht zu mindestens 90 Gew.-% aus einem thermoplastischen Polyester, der aus Dicarbonsäure- und aus Diol-abgeleiteten Einheiten aufgebaut ist.

Erfindungsgemäß umfasst die Basisschicht (B") einen Polyester, der ist zumindest 80 Mol-% aus Einheiten aufgebaut, die auf eine aromatische Dicarbonsäure zurückgehen und auf Basis von aliphatischen Diolen, die zumindest 2 Mol-% Butandiol und zumindest 1 Mol-% Neopentylglykol umfassen, wobei die Summe der Molprozente der Dicarbonsäuren und Diole jeweils 100 % ergibt.

In der bevorzugten Ausführungsform besteht der Polyester aus den folgenden Dicarboxylaten und Alkylenen, jeweils bezogen auf die Gesamtdicarboxylat- bzw. Gesamtalkylenmenge
- 80 bis 100 Mol-%, bevorzugt 85 bis 100 Mol-% und besonders bevorzugt 90 bis 100 Mol-% Terephthalat
- 0 bis 20 Mol-%, bevorzugt 0 bis 15 Mol-% und besonders bevorzugt 0 bis 10 Mol-% Isophthalat
- 2 bis 10 Mol-%, bevorzugt 3 bis 9 Mol-% und besonders bevorzugt 4 bis 8 Mol-% Butandioleinheiten
- 1 bis 8 Mol-%, bevorzugt 1,5 bis 7 Mol-% und besonders bevorzugt 2 bis 6 Mol-% Neopentylglykol
- 82 bis 97 Mol-%, bevorzugt 84 bis 95,5 Mol-% und besonders bevorzugt 86 bis 94 Mol-% EG (1,2-Ethandiol)
wobei sich die Molprozente der angeführten Dicarbonsäuren und Diole immer zu 100 % ergänzen.

Daneben kann der Polyester für die Basisschicht (B") aus Mischungen von Polyestern (z.B. aus zwei Polyestern, Polyester I und Polyester II) aufgebaut sein, die als Mischung betrachtet eine zu den oben aufgeführten Copolyestern äquivalente Monomerzusammensetzung aufweisen. Die daraus resultierende Mischung wird dann dem Extruder für diese Schicht zudosiert.

### Deckschicht (B')

### Polyester für die Deckschicht (B')

Erfindungsgemäß umfasst die heißsiegelbare und peelfähige Deckschicht (B') einen Copolyester und optional Partikel. Der Copolyester ist aufgebaut aus Einheiten, die von aromatischen und aliphatischen Dicarbonsäuren abgeleitet sind. Die auf die aromatischen Dicarbonsäuren zurückgehenden Einheiten sind in dem Copolyester in einer Menge von 25 bis 95 Mol-%, bevorzugt 40 bis 90 Mol-%, besonders bevorzugt 50 bis 88 Mol-% enthalten. Die auf die aliphatischen Dicarbonsäuren zurückgehenden Einheiten sind in dem Polyester in einer Menge von 5 bis 75 Mol-%, bevorzugt 10 bis 60 Mol-%, besonders bevorzugt 12 bis 50 Mol-% enthalten, wobei die Mol-%-Angaben sich immer zu 100 % ergänzen.

Beispiele für die erfindungsgemäß einsetzbaren aromatischen Dicarbonsäuren sind die Terephthalsäure, die Isophthalsäure und die 2,6 Naphthalindicarbonsäure.

Beispiele für aliphatische Dicarbonsäuren sind die Adipinsäure, die Pimelinsäure, die Korksäure, die Azelainsäure und die Sebazinsäure. Erfindungsgemäß bevorzugt einsetzbar sind die Azelainsäure und die Sebazinsäure, insbesondere bevorzugt die Sebazinsäure.

Beispiele für erfindungsgemäß einsetzbare Diole sind aliphatische Diole wie Ethylenglykol, 1,3-Propandiol, 1,4-Butandiol, 1,5-Pentandiol, Diethylenglykol, Triethylenglykol, 1,4-Cyclohexandimethanol und Neopentylglykol.

In der bevorzugten Ausführungsform besteht der Copolyester aus den folgenden Dicarboxylaten und Alkylenen, jeweils bezogen auf die Gesamtdicarboxylat- bzw. Gesamtalkylenmenge
- 25 bis 95 Mol-%, bevorzugt 30 bis 90 Mol-% und besonders bevorzugt 40 bis 70 Mol-% Terephthalat
- 0 bis 25 Mol-%, bevorzugt 5 bis 20 Mol-% und besonders bevorzugt 10 bis 20 Mol-% Isophthalat
- 5 bis 75 Mol-%, bevorzugt 8 bis 70 Mol-% und besonders bevorzugt 11 bis 65 Mol-% Sebazat
- 0 bis 50 Mol-%, bevorzugt 0 bis 40 Mol-% und besonders bevorzugt 0 bis 30 Mol-% Azelat
- mehr als 50 Mol-%, bevorzugt mehr als 60 Mol-% und besonders bevorzugt mehr als 70 Mol-% Ethylen.

Daneben kann der Polyester für die Deckschicht (B') aus Mischungen von Polyestern (z.B. aus zwei Polyestern, Polyester I und Polyester II) aufgebaut sein, die als Mischung betrachtet eine zu den oben aufgeführten Copolyestern äquivalente Monomerzusammensetzung aufweisen. Die daraus resultierende Mischung wird dann dem Extruder für diese Schicht zudosiert.

### Partikel in der Deckschicht (B')

Zur Verbesserung der Verarbeitbarkeit und zur Bereitstellung der gewünschten Peeleigenschaften der Folie empfiehlt es sich, die Deckschicht (B') analog zur Deckschicht (A') der Unterfolie mit geeigneten Partikeln zu modifizieren. Hierbei kann auf die gleichen Partikel zurückgegriffen werden, wie sie für die Deckschicht (A') der Unterfolie als geeignet beschrieben worden sind. Es hat es sich als günstig erwiesen, wenn die heißsiegelbare und peelfähige Deckschicht (B') Partikel in einer Konzentration von > 0 bis 10 Gew.-% enthält. Bevorzugt beträgt die Konzentration der Partikel 0,7 bis 8,0 Gew.-% und besonders bevorzugt 1,0 bis 6,0 Gew.-%. Enthält die Deckschicht (B') der Folie dagegen keine Partikel, so verringert sich der positive Einfluss auf das Abziehverhalten der Folie von der Menüschale. Enthält die Deckschicht (B') der Folie mehr als 10 Gew.-% Partikel, so besteht die Gefahr, dass die Trübung der Folie zu groß wird.

### Anti PET-Polymer in der Deckschicht (B')

Optional enthält die Deckschicht (B') ein mit Polyester unverträgliches Polymer (anti-PET-Polymer). Der Anteil des anti-PET-Polymers beträgt dann 2 bis 20 Gew.-%, bezogen auf die Masse der Deckschicht (B'). In einer bevorzugten Ausführungsform beträgt der Anteil des anti-PET-Polymers 4 bis 20 Gew.-% und in der besonders bevorzugten Ausführungsform beträgt er 6 bis 20 Gew.-%.

Beispiele für geeignete anti-PET-Polymere sind Polymere auf Basis von Ethylen, Propylen, Cycloolefinen, Amiden oder Styrol. In einer bevorzugten Ausführungsform wird als anti-PET-Polymer ein Copolymer verwendet. Beispiele hierfür sind Copolymere auf Basis von Ethylen, Propylen oder auf Basis von Cycloolefinen (Norbomen/Ethylen-, Tetracyclododecen/Ethylen-Copolymere). In der besonders bevorzugten Ausführungsformen ist das mit Polyester unverträgliche Polymer ein Cycloolefincopolymer (COC). Solche Cycloolefincopolymere sind beispielsweise in der EP-A 1 068 949 oder in der JP 05-009319 beschrieben, auf die hier Bezug genommen wird.

Unter den COCs sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere, die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die COCs weisen im Allgemeinen Glasübergangstemperaturen zwischen -20 und 400 °C auf. Für die Erfindung sind solche COCs geeignet, die eine Glasübergangstemperatur von kleiner als 120 °C, bevorzugt kleiner als 100 °C und besonders bevorzugt kleiner als 80 °C aufweisen. Vorzugsweise sollte die Glasübergangstemperatur oberhalb von 50 °C liegen, bevorzugt oberhalb von 55 °C, insbesondere oberhalb von 60 °C.

Folien, die ein COC mit einer Glasübergangstemperatur von kleiner als 100 °C enthalten, zeichnen sich gegenüber solche, die ein COC mit einer Glasübergangstemperatur von größer 100° C enthalten, durch eine niedrigere Trübung und durch eine verbesserte Siegelbarkeit aus.

Die EP-A-0 283 164, EP-A-0 407 870, EP-A-0 485 893 und EP-A-0 503 422 beschreiben die Herstellung von COC`s mit Katalysatoren, basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COC sind käuflich erhältlich; z.B. Topas^{®} (Ticona, Frankfurt).

Die Zugabe des anti-PET-Polymers begünstigt die Siegelung und das Verarbeitungsverhalten, insbesondere die Wicklung der Folie. Beträgt der Anteil des COC's weniger als 2 Gew.-%, so ist ein positiver Einfluss des Polymeren auf die Siegelung, das Peelverhalten und die Herstellbarkeit der Folie nicht mehr gegeben. Die Folie neigt zum Verblocken. Andererseits sollte der Anteil von dem anti-PET-Polymers 20 Gew.-% nicht überschreiten, da die Trübung der Folie sonst zu hoch wird.

### Dicke der Deckschicht (B')

Erfindungsgemäß weist die Deckschicht (B') eine Dicke von 1,5 bis 5 µm auf. Ist die Dicke der Deckschicht (B') geringer als 1,5 µm, so ist die Siegelung der Oberfolie (B) zur Unterfolie (A) nicht ausreichend. Ist die Deckschichtdicke größer als 5 µm, so wird die Siegelung zu fest, was unerwünscht ist.

Die Oberfolie zeigt aufgrund der Zusammensetzung der Schichten der Oberfolie gute Siegel- und Peeleigenschaften zur Unterfolie. Nach der Heißversiegelung von beiden Folien bei 160 °C (460 N, 2 s) ist die Peelbarkeit von der Oberfolie zur Unterfolie größer als 3 N/15 mm und beträgt max. 7 N/15 mm. In allen Fällen (sowohl bei Raumtemperatur als auch in kalter Umgebung bei 4 °C) wird dabei eine peelfähige Siegelung erzielt, auch für den Fall, dass die Folie partiell mit Fleischsaft oder dergleichen kontaminiert ist. Die "Cold-Peel" Eigenschaften der gesiegelten Folien sind ebenfalls hervorragend. Es wird ein "medium Peel" bei einer Prüftemperatur von 4 °C erzielt.

Die sehr guten "Cold-Peel" Eigenschaften der Verpackung werden aus dem Zusammenwirken der erfindungsgemäßen Rezepturen der Unterfolie (A) und der Oberfolie (B) erzielt. Insbesondere durch die spezielle Rezepturierung der Basisschicht (B") als auch der Deckschicht (B') der Oberfolie konnte das Peelverhalten der Packung derart verbessert werden, dass ein "Medium-Cold-Peel" erzielt wird.

### Aufbau der Oberfolie (B)

Die erfindungsgemäße Oberfolie (B) kann zwei- oder dreischichtig aufgebaut sein. Zur Erzielung der vorgenannten Eigenschaften, insbesondere der geforderten guten optischen Eigenschaften, hat sich ein dreischichtiger Aufbau der Oberfolie (B) mit den Schichten B‴B"B' als günstig erwiesen. Die Oberfolie (B) umfasst dann die Basisschicht B", die heißsiegelbare und peelfähige Deckschicht B` auf der einen Seite der Basisschicht B" und die Deckschicht B‴ auf der anderen Seite der Basisschicht B". Die Deckschicht (B‴) entspricht von der Rezeptur her der Basisschicht (B"), muss aber nicht zwingend mit dieser identisch sein.

### Dicke der Oberfolie (B)

Die Gesamtdicke der erfindungsgemäßen Oberfolie (B) kann innerhalb bestimmter Grenzen variieren. Sie beträgt 10 bis 125 µm, bevorzugt 15 bis 120 µm und besonders bevorzugt 20 bis 115 µm. Ist die Dicke der Oberfolie (B) geringer als 10 µm, so sind die mechanischen Eigenschaften der Folie nicht mehr ausreichend. Ist die Dicke der Oberfolie (B) dagegen größer als 125 µm, so verlängert sich die Zeit zur Versiegelung der Verpackung, was unerwünscht ist.

### Verfahren zur Herstellung der Oberfolie (B)

Die Erfindung betrifft daneben ein Verfahren zur Herstellung der erfmdungsgemäßen Polyesterfolie (B). Im Rahmen dieses Verfahrens wird so vorgegangen, dass die den einzelnen Schichten (B'B" und gegebenenfalls B‴) der Oberfolie (B) entsprechenden Schmelzen durch eine Flachdüse koextrudiert werden, die so erhaltene Folie zur Verfestigung auf einer oder mehreren Walzen abgezogen wird, die Folie anschließend biaxial gestreckt und die biaxial gestreckte Folie thermofixielt und aufgerollt wird.

Die biaxiale Verstreckung wird sequenziell durchgeführt. Dabei wird vorzugsweise erst in Längsrichtung (in Maschinenrichtung) und anschließend in Querrichtung (senkrecht zur Maschinenrichtung) verstreckt. Das Verstrecken in Längsrichtung lässt sich mit Hilfe mehrerer entsprechend dem angestrebten Streckverhältnis verschieden schnell laufenden Walzen durchführen. Zum Querverstrecken benutzt man allgemein einen Kluppenrahmen.

Zunächst werden die Polyester, bzw. die Polyestermischungen, für die einzelnen Schichten in jeweiligen Extrudern verflüssigt, wobei die gegebenenfalls als Zusätze vorgesehenen Additive bereits im Polymer bzw. in der Polymermischung enthalten sein können. Die Schmelzen werden gleichzeitig durch eine Flachdüse (Breitschlitzdüse) gepresst, und die ausgepresste mehrschichtige Schmelze wird auf einer oder mehreren Abzugswalzen abgezogen, wobei die Schmelze abkühlt und sich zu einer Vorfolie verfestigt.

Die Temperatur, bei der die Streckungen durchgeführt werden, kann in einem großen Bereich variieren und richtet sich nach den gewünschten Eigenschaften der Folie. Im Allgemeinen wird die Längsstreckung bei einer Temperatur im Bereich von 80 bis 130 °C und die Querstreckung bei einer Temperatur im Bereich von 90 bis 150 °C durchgeführt. Das Längsstreckverhältnis liegt allgemein im Bereich von 2,5:1 bis 6:1. Das Querstreckverhältnis liegt allgemein im Bereich von 3,0:1 bis 5,0:1.

Bei der nachfolgenden Thermofixierung wird die Folie über eine Zeitdauer von etwa 0,1 bis 10 s bei einer Temperatur von 180 bis 240 °C gehalten. Anschließend wird die Folie in üblicher Weise aufgewickelt.

### Erfindungsgemäße Eigenschaften

Die erfindungsgemäße Verpackung, hergestellt mit den beiden erfindungsgemäßen Folien, besitzt eine Reihe von Eigenschaften, von denen untenstehend die wichtigsten aufgeführt sind.

Die erfindungsgemäße Packung zeigt das geforderte sehr gute Cold-Peel-Verhalten. Bei einer Versiegelung der Packung in kalter Umgebung von 4 °C (Siegelbedingungen 160 °C, 460 N, 2 s) und darauffolgendem Abziehen der Oberfolie bei einer Temperatur von 4 °C, wird stets ein "medium Cold-Peel" erreicht.

Die optischen Eigenschaften beider Polyesterfolien und damit der Packung sind sehr gut. Die Trübung der beiden Folien beträgt weniger als 20 % und die Clarity der beiden Folien ist größer als 80 %.

Die Polyesterfolien eignen sich hervorragend zum Verpacken von Nahrungs- und Genussmitteln, insbesondere zur Verpackung von Nahrungs- und Genussmitteln in Menüschalen, bei denen heißsiegelbare Polyesterfolien zum Verschließen der Verpackung verwendet werden.

Die Tabelle 1 fasst u.a. die wichtigsten erfindungsgemäßen Folieneigenschaften zusammen.

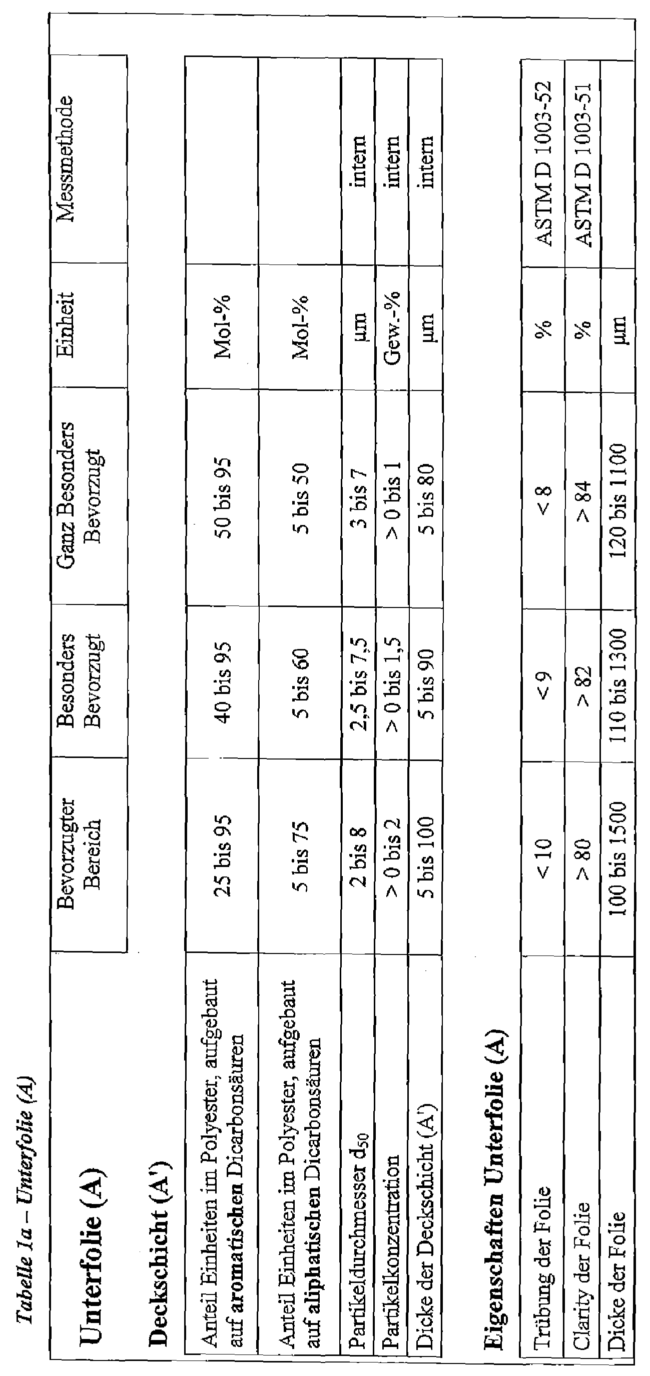

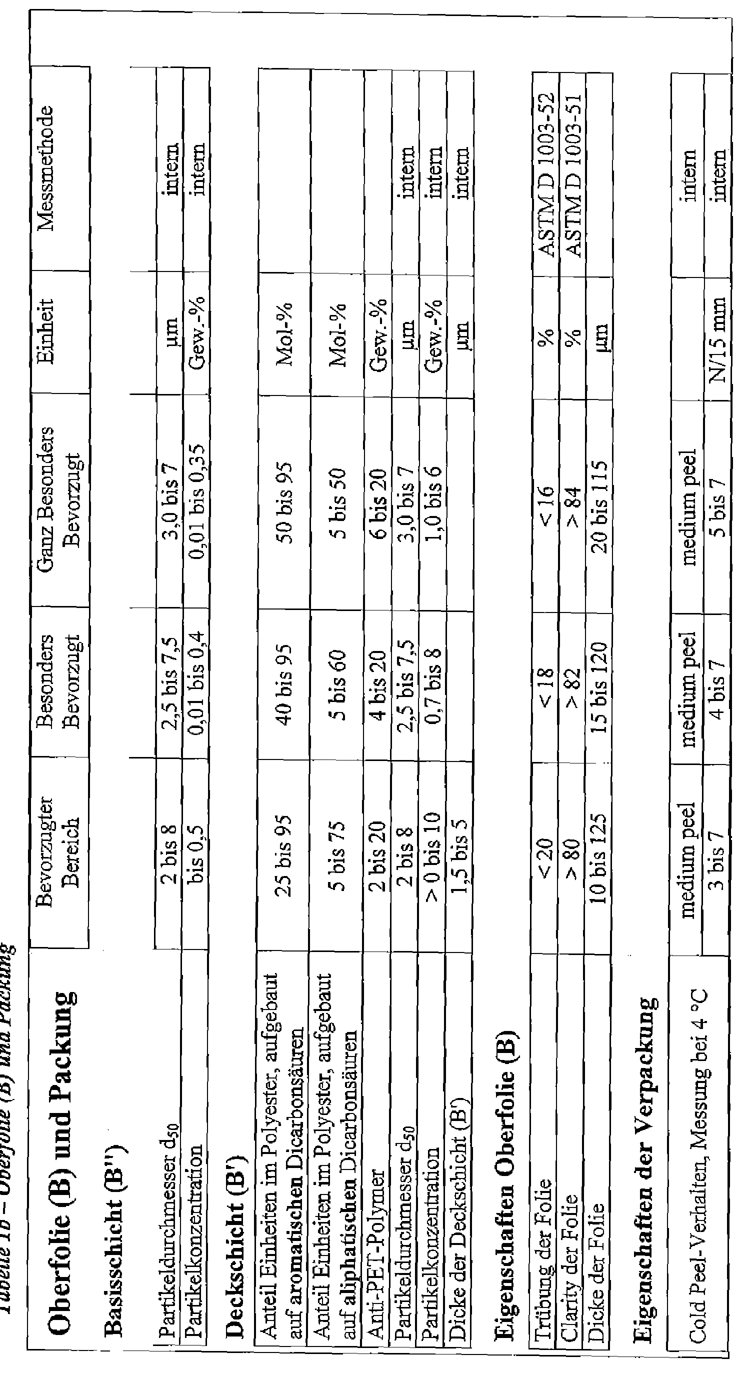

### Messmethoden

### "Cold-Peel"

Die heißsiegelbare und peelfähige Polyesterfolie wird auf die Menüschale gesiegelt und die gesiegelte Packung für 1 h in einer auf 4 °C temperierten Kühlkammer gelagert. Die gesiegelte Packung wird in der geschlossenen Kühlkammer mit dem Handpeelgerät "PEEL CONTROL" der Fa. PITSID (Polygraphische innovative Technik Leipzig GmbH, Leipzig, Deutschland), Figur 4, getestet. Die Arbeitsweise mit dem Gerät ist ähnlich zu derjenigen mit dem Zug-Dchnungs-Prüfgerät, die Proben werden jedoch mit der Hand auseinandergezogen.

Die Messung erfolgt nach der folgenden internen Prüfvorschrift: Von den gesiegelten Proben werden 15 mm breite Teststreifen vom Siegelrand der Menüschale und der darauf heißgesiegelten Folie (quer oder aber auch längs zum Randverlauf) geschnitten. Der freie Folienabschnitt wird in das Handpeelgerät eingeklemmt und zwischen Folienabschnitt und Siegelrand der Menüschale wird mittels Hand ein Schälwinkel von 180 ° eingestellt. Mit der einen Hand wird der freie Folienabschnitt festgehalten und mit der anderen Hand so an dem Gerät gezogen, dass die beiden Folien geschält werden. Es wird ein Messschrieb entsprechend Figur 3 erhalten. Messwert ist die maximale Peelkraft Fₘₐₓ, die notiert wird. Bei diesem Vorgang muss die Probe komplett peelen, d.h. sie darf weder einreißen noch weitereißen. Dieser Vorgang wird 5mal wiederholt und ein entsprechender arithmetischer Mittelwert *F̅ₘₐₓ* gebildet. Eine Beurteilung des "Cold-Peel" erfolgt mit Hilfe der folgenden Tabelle.

| | |
|---|---|
| Leichte Peelbarkeit (easy Peel) | Peelkraft im Bereich von ungefähr 2 bis 3 N je 15 mm Streifenbreite |
| Widerstandsfähige Peelbarkeit (medium Peel) | Peelkraft im Bereich von ungefähr 3 bis 7 N je 15 mm Streifenbreite |
| Starke, widerstandsfähige Peelbarkeit (strong Peel) | Peelkraft im Bereich von mehr als 7 N je 15 mm Streifenbreite |

### Kontamination

Zur Simulation kontaminierter Oberflächen werden vor der Siegelung der Siegelrand der Menüschale (Oberfläche A`) mit Wasser vollflächig bestrichen. Neben Wasser werden noch andere Verunreinigungen, z.B. Fleischsaft ausprobiert. Dazu wird der Siegelrand mit einigen Tropfen Fleischsaft (3 Tropfen, statistisch auf den Siegelrand verteilt) bestrichen.

### Trübung und Clarity

Die Messung an den Polyesterfolien erfolgt am Hazegard Hazemeter XL-211 der Fa. BYK Gardner. Die Trübung nach Hölz wird nach ASTM-D 1003-61, Methode A, bestimmt. Die Messung der Clarity geschieht nach ASTM-D 1003 mittels Hazegard, jedoch jetzt am "clarity port" des Messgerätes. Die Messungen werden sämtlich direkt nach Herstellung der Folie durchgeführt.

### Beispiel 1

### I Herstellung der thermoformbaren Polyesterfolie (A)

Zur Herstellung der thermoformbaren Polyesterfolie (A) wurden für die jeweiligen koextrudierten Schichten (A‴A"A') folgende Ausgangsmaterialien verwendet:

### Deckschicht (A'), Mischung aus

| | |
|---|---|
| 70 Gew.-% | Polyester I (Copolyester aus 78 Mol-% Ethylenterephthalat, 22 Mol-% Ethylenisophthalat) mit einem SV-Wert von 850 |
| | (Die Messmethode für den SV-Wert findet man z.B. in der EP 3 321 083 B1, auf diese wird hier ausdrücklich verwiesen) |
| 30 Gew.-% | Polyester II (Copolyester enthaltend 40 Mol-% Ethylensebazat, 60 Mol-% Ethylentherephthalat) mit einem SV-Wert von 1100. |

### Basisschicht (A")

| | |
|---|---|
| 100 Gew.-% | Copolyester, aufgebaut aus 95 Mol-% Terephthalat- und 5 Mol-% Isophthalat-Einheiten, sowie aus 100 Mol-% Ethylenglykol-Einheiten, mit einem SV-Wert von 800 |

### Deckschicht (A‴)

| | |
|---|---|
| 95 Gew.-% | Copolyester, aufgebaut aus 95 Mol-% Terephthalat- und 5 Mol-% Isophthalat-Einheiten, sowie aus 100 Mol-% Ethylenglykol-Einheiten, mit einem SV-Wert von 800 |
| 5 Gew.-% | Mischung aus 98,5 Gew.-% Polyethylenterephthalat und 1,5 Gew.-% Sylobloc 46 |

### Dicke der Folie (A)

500 µm

### Deckschichtdicken (A' und A‴)

20 µm

Die o.g. Rohstoffe wurden in je einem Extruder pro Schicht aufgeschmolzen und durch eine dreischichtige Breitschlitzdüse mit A‴A"A'-Aufbau auf eine gekühlte Abzugswalze extrudiert. Die erhaltene amorphe Folie wurde gesäumt und aufgerollt. Die Herstellungsbedingungen in den einzelnen Verfahrensschritten waren

| Extrusion | Temperaturen für die Schmelzen (A"'A"A') | | 270 | °C |
|---|---|---|---|---|
| | Temperatur der Abzugswalze | | 20 | °C |
| | Verweilzeit der Folie auf der Abzugswalze | | 10 | s |

In der Tabelle 2a sind die Zusammensetzung der Folie, sowie weitere Informationen zur erfindungsgemäßen Folie, insbesondere zu den Eigenschaften der erfindungsgemäßen Folie, dargestellt.

### II Herstellung der Oberfolie (B)

Zur Herstellung der heißsiegelbaren und peelfähigen Oberfolie (B) wurden für die einzelnen koextrudierten Schichten (B'B"B‴) die folgenden Ausgangsmaterialien verwendet

### Deckschicht (B`)

| | |
|---|---|
| 38 Gew.-% | Polyester I (Copolyester aus 78 Mol-% Ethylenterephthalat, 22 Mol-% Ethylenisophthalat) mit einem SV-Wert von 850. Polyester I enthält desweiteren 5,0 Gew.-% ^{®}Sylysia 430 (synthetisches SiO₂, Fuji, Japan) mit einem Partikeldurchmesser von d₅₀ = 3,4 µm. |
| 60 Gew.-% | Polyester II (Copolyester enthaltend 40 Mol-% Ethylensebazat, 60 Mol-% Ethylentherephthalat,) mit einem SV-Wert von 1000. |
| 2 Gew.-% | antiPET-Polymer (COC, ^{®}Topas 8007, Fa. Ticona, T_{G} von 75°C). |

### Basisschicht (B")

| | |
|---|---|
| 92 Gew.-% | Polyester I (Polyethylenterephthalat mit einem SV-Wert von 800) |
| 8 Gew.-% | Polyester II (Copolyester enthaltend 100 Mol-% terephthalat, 60 Mol-% Butandiol, 35 Mol-% Neopentylglykol, Rest EG (1,2-Ethandiol)) mit einem SV-Wert von 1000. |

### Deckschicht (B‴)

| | |
|---|---|
| 95 Gew.-% | Polyethylenterephthalat |
| 5 Gew.-% | Mischung aus 98,5 Gew.-% Polyethylenterephthalat und 1,5 Gew.-% Sylobloc 46. |

Die o.g. Rohstoffe wurden in je einem Extruder pro Schicht aufgeschmolzen und durch eine dreischichtige Breitschlitzdüse mit dem Aufbau (B'B"B‴) auf eine gekühlte Abzugswalze extrudiert. Die so erhaltene amorphe Vorfolie wurde zuerst längsverstreckt. Danach wurde die Folie quergestreckt, fixiert und aufgerollt (Enddicke der Folie 40 µm). Die Herstellungsbedingungen in den einzelnen Verfahrensschritten waren

| | | | |
|---|---|---|---|
| Extrusion | Temperaturen für die Schmelzen (B' B"B"') | 270 | °C |
| | Temperatur der Abzugswalze | 20 | °C |
| Längsstreckung | Aufheiztemperatur der Walzen | 80-120 | °C |
| | Strecktemperatur | 115 | °C |
| | Längsstreckverhältnis | 3,5 | |
| Querstreckung | Temperatur der Aufheizfelder | 80-135 | °C |
| | Strecktemperatur | 130 | °C |
| | Querstreckverhältnis | 4,2 | |
| Fixierung | Temperatur | 230 | °C |
| | Dauer | 3 | s |

In der Tabelle 2b sind die Zusammensetzung der Folie, sowie weitere Informationen zur erfindungsgemäßen Folie dargestellt.

### III Herstellung der Verpackung

Die Verpackung wurde in einer Umgebung von 4 °C hergestellt. Dazu wurden die thermoformbare Unterfolie (A) und die heißsiegelbare Deckelfolie/Oberfolie (B) jeweils für sich in eine Multivac-Maschine (R 245/SN: 166619; MULTIVAC Deutschland GmbH & Co. KG, Wolfertschwenden, Deutschland) eingespannt. Die thermoformbare Unterfolie wurde unter den Formbedingungen (Formtemperaturen 150 °C, Zeit Anheizen: 2 - 3 s, Explosionsverformung / Druckluftspeicher 2 bar, Formdruck 2 bar, Formen 2 s) tiefgezogen. Der Tiefzug betrug 50 mm.

In den Hohlraum der thermogeformten Unterfolie wurden Portionen von Schweinefleisch gelegt und danach die Deckelfolie/Oberfolie (B) in Kontakt mit der Oberseite der Menüschale gebracht. Dabei wurde die Deckelfolie/Oberfolie (B) so auf die Menüschale gelegt, dass die heißsiegelbare Oberfläche (=Deckschicht (B')) der Oberfolie (B) in Kontakt mit der Portion Fleisch und der Oberfläche (=Deckschicht (A')) der Menüschale/Unterfolie war. Die Heißversiegelung der Packung wurde in der Maschine bei einer Siegelbackentemperatur von 160 °C, 2 s, bei einem Druck von 2 bar durchgeführt. Die Siegelung war fest und dauerhaft. Zur Simulation kontaminierter Oberflächen wurden vor der Siegelung die Siegelränder von Oberfläche (= Deckschicht (A')) einiger Menüschalen/Unterfolien vollflächig mit Wasser bestrichen.

Das "Cold-Peel" -Verhalten der Packungen (mit und ohne Kontamination) wurde entsprechend der oben beschriebenen Methode geprüft. Die Peelkraft zum Öffnen der Packung betrug in beiden Fällen ca. 5 N/15 mm und entspricht damit dem gewünschten "Medium Cold-Peel".

### Beispiel 2

Im Vergleich zu Beispiel 1 wurde nur die Rezeptur der Deckschicht (A') geändert, alles andere wurde gleichgehalten.

### Deckschicht (A'), Mischung aus

- 60 Gew.-%: Polyester I (Copolyester aus 78 Mol-% Ethylenterephthalat, 22 Mol-% Ethylenisophthalat), mit einem SV-Wert von 850.
- 40 Gew.-%: Polyester II (= Copolyester enthaltend 40 Mol-% Ethylensebazat, 60 Mol-% Ethylentherephthalat), mit einem SV-Wert von 1000.

### Beispiel 3

Im Vergleich zu Beispiel 1 wurde nur die Rezeptur der Deckschicht (A') geändert, alles andere wurde gleichgehalten.

### Deckschicht (A'), Mischung aus

- 77 Gew.-%: Polyester I (Copolyester aus 67 Mol-% Ethylenterephthalat, 33 Mol-% Ethylenisophthalat) mit einem SV-Wert von 850. Polyester I enthält desweiteren 0,15 Gew.-% Sylobloc 43 mit einem d₅₀ von 3,9 µm;
- 23 Gew.-%: Polyester II (= Copolyester enthaltend 40 Mol-% Ethylensebazat, 60 Mol-% Ethylentherephthalat), mit einem SV-Wert von 1000.

### Vergleichsbeispiel 1

Es wurde das Beispiel 1 der EP 3 623 154 B1 nachgearbeitet. Für die heißsiegelbare Deckelfolie wurde dabei die Folie gemäß Beispiel 3 der EP 1 138 480 B1 verwendet. Die Packung weist kein Cold-Peel auf.

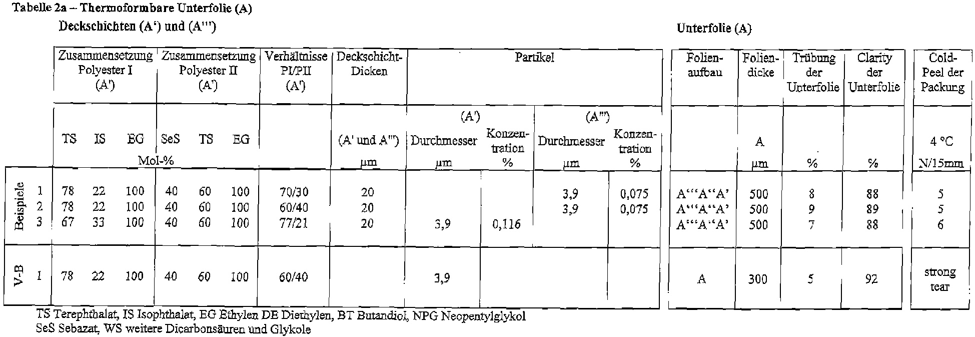

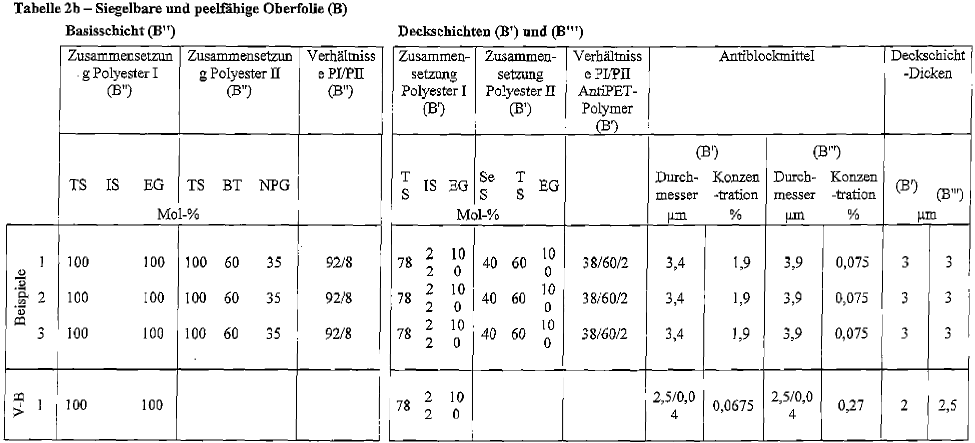

### Oberfolie (B)

| Folienaufbau | Foliendicke | Trübung der Oberfolie | Clarity der Oberfolie |
|---|---|---|---|
| | B | | |
| | µm | % | % |
| B‴B"B' | 40 | 14 | 83 |
| B‴B"B' | 40 | 15 | 82 |
| B‴B"B' | 40 | 13 | 84 |
| B‴B"B' | 12 | | |

## Patentansprüche

1. Packung bestehend aus einer koextrudierten, ungestreckten, thermoformbaren Unterfolie (A) und einer koextrudierten und biaxial orientierten Oberfolie (B), die zu der Unterfolie (A) heißsiegelbar und in der Kälte peelfähig ist ("Cold-Peel"), wobei
I die Unterfolie (A) eine Folie ist, die zumindest eine Basisschicht (A") aus aPET und eine Deckschicht (A') umfasst, wobei die Unterfolie (A) zumindest 80 Gew.-% Polyester enthält und wobei
a) der Polyester der Deckschicht (A') ein Copolyester ist, der aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen und aus 100 Mol-% an Einheiten, die auf mindestens ein aliphatisches Diol zurückgehen, aufgebaut ist, wobei die Mol-%-Angaben sowohl der Dicarbonsäure- als auch der Diol-Einheiten sich zu 100 % ergänzen;
b) die Deckschicht (A') > 0 bis 2,0 Gew.-% anorganische oder organische *Partikel* mit einem mittleren Durchmesser d₅₀ von 2 bis 8 µm enthält;
c) die Deckschicht (A') eine Schichtdicke von 5 bis 100 µm aufweist; und wobei
II die Oberfolie (B) eine koextrudierte und biaxial orientierte Polyesterfolie ist, die eine Basisschicht (B") und eine gegenüber der Deckschicht (A`) der Unterfolie (A) heißsiegelbare und peelfähige Deckschicht (B') aufweist, wobei
d) der Polyester der Basisschicht (B") ein Copolyester ist, der aus mindestens 80 Mol-% an Einheiten aufgebaut ist, die auf eine aromatische Dicarbonsäure zurückgehen sowie von Einheiten aufgebaut ist, die auf aliphatische Diole zurückgehen, die 2-10 Mol-% Butandiol-Einheiten und 1-8 Mol-% Neopentylglykol-Einheiten enthalten, wobei die Summe der Molprozente der Dicarbonsäure- und Diol-Einheiten jeweils 100 % ergibt und der zu 100 Mol-% fehlende Anteil bei den Diol-Einheiten Ethylenglykol ist, und
die heißsiegelbare und peelfähige Deckschicht (B')
e) zu mindestens 80 Gew.-%, aus einem Copolyester aufgebaut ist, der aus 25 bis 95 Mol-% an Einheiten aufgebaut ist, die auf mindestens eine aromatische Dicarbonsäure und 5 bis 75 Mol-% an Einheiten, die auf mindestens eine aliphatische Dicarbonsäure zurückgehen, wobei die Summe der dicarbonsäureabgeleiteten Molprozente 100 ergibt; und
f) > 0 bis 10 Gew.-% anorganische und/oder organische Partikel mit einem mittleren Durchmesser d₅₀ von 2 bis 8 µm enthält
und wobei die Oberfolie (B) aufgrund der oben genannten Zusammensetzung
g) zur Deckschicht (A') der Unterfolie (A) ein "Cold-Peel" aufweist, das gemessen bei 4 °C, im Bereich von 3 bis 7 N/15 mm liegt (= medium. Cold-Peel).

2. Packung nach Anspruch 1, wobei die Unterfolie (A) zweischichtig ist aus der Basisschicht A" und der Deckschicht A` besteht, oder dreischichtig ist und - in dieser Sequenz - aus der Deckschicht A‴ der Basisschicht A" und der Deckschicht A' besteht, wobei die Deckschichten A` und A‴ gleich oder verschieden sind.

3. Packung nach Anspruch 1 oder 2, wobei die Oberfolie (B) zweischichtig ist aus der Basisschicht B" und der Deckschicht B` besteht, oder dreischichtig ist und - in dieser Sequenz - aus der Deckschicht B‴ der Basisschicht B" und der Deckschicht B` besteht, wobei die Deckschichten B' und B‴ gleich oder verschieden sind.

4. Packung nach Anspruch 1, 2 oder 3, wobei die Basisschicht (A") der Unterfolie (A) aus einem Polyester besteht, der aus Dicarbonsäure- und aus Diol-abgeleiteten Einheiten aufgebaut ist und die folgenden Dicarboxylate und Alkylene, jeweils bezogen auf die Gesamtdicarboxylat- bzw. Gesamtalkylenmenge, beinhaltet:
• ≥ 90 Mol-%, bevorzugt ≥ 92 Mol-%, besonders bevorzugt ≥ 95 Mol-% Terephthalat
• ≤ 10 Mol-%, bevorzugt ≤ 8 Mol-%, besonders bevorzugt ≤ 5 Mol-% Isophthalat
• ≥ 90 Mol-%, bevorzugt ≥ 95 Mol-% und besonders bevorzugt ≥ 98 Mol-% an Ethylen.

5. Packung nach einem der Ansprüche 1-4, wobei die Basisschicht (A") der Unterfolie (A) bis zu 70 Gew.-% Regenerat aus der Packungsherstellung ("skeletal waste") enthält.

6. Packung nach einem der Ansprüche 1-5, wobei der Copolyester der Deckschicht (A') die folgenden Dicarboxylate und Alkylene, jeweils bezogen auf die Gesamtdicarboxylat- bzw. Gesamtalkylenmenge enthält:
• 25 bis 95 Mol-%, bevorzugt 30 bis 90 Mol-% und besonders bevorzugt 40 bis 70 Mol-% Terephthalat
• 0 bis 35 Mol-%, bevorzugt 5 bis 35 Mol-% und besonders bevorzugt 10 bis 35 Mol-% Isophthalat
• 5 bis 75 Mol-%, bevorzugt 8 bis 70 Mol-% und besonders bevorzugt 11 bis 65 Mol-% Sebazat
• 0 bis 50 Mol-%, bevorzugt 0 bis 40 Mol-% und besonders bevorzugt 0 bis 30 Mol-% Azelat
• ≥30 Mol-%, bevorzugt ≥40 Mol-% und besonders bevorzugt ≥ 50 Mol-% Ethylen.

7. Packung nach einem der Ansprüche 1-6, wobei die Unterfolie (A) 100 bis 1500 µm, bevorzugt 110 bis 1300 µm und besonders bevorzugt 120 bis 1100 µm dick ist.

8. Packung nach einem der Ansprüche 1-7, wobei der Copolyester der Basisschicht (B") aus den folgenden Dicarboxylaten und Alkylenen, jeweils bezogen auf die Gesamtdicarboxylat- bzw. Gesamtalkylenmenge besteht:
• 80 bis 100 Mol-%, bevorzugt 85 bis 100 Mol-% und besonders bevorzugt 90 bis 100 Mol-% Terephthalat
• 0 bis 20 Mol-%, bevorzugt 0 bis 15 Mol-% und besonders bevorzugt 0 bis 10 Mol-% Isophthalat
• 2 bis 10 Mol-%, bevorzugt 3 bis 9 Mol-% und besonders bevorzugt 4 bis 8 Mol-% Butandioleinheiten
• 1 bis 8 Mol-%, bevorzugt 1,5 bis 7 Mol-% und besonders bevorzugt 2 bis 6 Mol-% Neopentylglykol
• 82 bis 97 Mol-%, bevorzugt 84 bis 95,5 Mol-% und besonders bevorzugt 86 bis 94 Mol-% EG (1,2-Ethandiol)
wobei sich die Molprozente der angeführten Dicarbonsäuren und Diole immer zu 100 % ergänzen.

9. Packung nach einem der Ansprüche 1-8, wobei der Copolyester der Deckschicht (B') aus den folgenden Dicarboxylaten und Alkylenen, jeweils bezogen auf die Gesamtdicarboxylat- bzw. Gesamtalkylenmenge besteht:
• 25 bis 95 Mol-%, bevorzugt 30 bis 90 Mol-% und besonders bevorzugt 40 bis 70 Mol-% Terephthalat
• 0 bis 25 Mol-%, bevorzugt 5 bis 20 Mol-% und besonders bevorzugt 10 bis 20 Mol-% Isophthalat
• 5 bis 75 Mol-%, bevorzugt 8 bis 70 Mol-% und besonders bevorzugt 11 bis 65 Mol-% Sebazat
• 0 bis 50 Mol-%, bevorzugt 0 bis 40 Mol-% und besonders bevorzugt 0 bis 30 Mol-% Azelat
• mehr als 50 Mol-%, bevorzugt mehr als 60 Mol-% und besonders bevorzugt mehr als 70 Mol-% Ethylen.

10. Packung nach einem der Ansprüche 1-9, wobei die Deckschicht (B') ein mit Polyester unverträgliches Polymer (anti-PET-Polymer) enthält.

11. Packung nach Anspruch 10, wobei der Anteil des anti-PET-Polymers 2 bis 20 Gew.-% beträgt.

12. Packung nach Anspruch 10 oder 11, wobei das anti-PET-Polymer ein Polymer auf Basis von Ethylen, Propylen, Cycloolefinen, Amiden oder Styrol ist, bevorzugt ein Copolymer auf Basis von Ethylen, Propylen oder auf Basis von Cycloolefinen wie einem Norbomen/Ethylen- oder Tetracyclododecen/Ethylen-Copolymer, und besonders bevorzugt ein Cycloolefincopolymer (COC) ist.

13. Packung nach Anspruch 10, 11 oder 12, wobei das anti-PET-Polymer ein Cycloolefincopolymer (COC) ist, das eine Glasübergangstemperatur von kleiner als 120 °C, bevorzugt kleiner als 100 °C und besonders bevorzugt kleiner als 80 °C aufweist.

14. Packung nach einem der Ansprüche 1-13, wobei die Oberfolie (B) 10 bis 125 µm, bevorzugt 15 bis 120 µm und besonders bevorzugt 20 bis 115 µm dick ist.

15. Verwendung der Packung nach Anspruch 1 zur Verpackung von Lebensmitteln.
